# EUROPEAN PATENT SPECIFICATION

(11) **EP 3 218 703 B1**
(45) Date of publication and mention of the grant of the patent: **26.06.2019**
(21) Application number: 15859685.8
(22) Date of filing: 14.10.2015
(51) Int. Cl.: G01N 27/62, G01N 30/72, G01N 30/86, H01J 49/00

(54) **DETERMINING THE IDENTITY OF MODIFIED COMPOUNDS**
BESTIMMUNG DER IDENTITÄT VON MODIFIZIERTEN VERBINDUNGEN
DÉTERMINATION DE L'IDENTITÉ DE COMPOSÉS MODIFIÉS

(30) Priority: 13.11.2014 US 201462079048 P
(43) Date of publication of application: 20.09.2017
(73) Proprietor: DH Technologies Development PTE. Ltd., Singapore 739256 (SG)
(72) Inventor: LAU, Adam San-Ho, Markham, Ontario L6B 1J2 (CA)
(74) Representative: J A Kemp
(86) International application number: PCT/IB2015/057878
(87) International publication number: WO 2016/075565

(56) References cited:
- WO-A1-2013/098618
- US-A1- 2005 288 872
- US-A1- 2013 206 979
- US-A1- 2014 252 218
- DASARI ET AL.: 'Reliable detection of deamidated peptides from lens crystallin proteins using changes in reversed-phase elution times and parent ion masses' JOURNAL OF PROTEOME RESEARCH vol. 6, no. 9, 01 January 2007 - 08 April 2007, pages 3819 - 3826, XP055441161 DOI: 10.1021/PR070182X

## Description

In many applications it is useful to detect and identify modified forms of a known compound. In proteomics, it is useful to detect and identify modified forms of a peptide. Peptides can have many modified forms, some of biological importance (such as phosphorylation, methylation, etc.) and others from experimental artifacts (unexpected trypsin products, methionine oxidation, etc.). In drug metabolism, it is useful to detect and identify modified forms of an administered drug. The goal is to seek derivative forms of the administered drug caused by metabolic reactions such as oxidation, sulphation, etc. In forensic studies, it is useful to detect and identify modified forms of known compounds, such as drugs of abuse, which may indicate a new drug. In all of these cases the parent compound and its fragment spectra are known.

Traditionally, modified forms are detected and identified using an information dependent acquisition (IDA) method. IDA is a flexible tandem mass spectrometry method in which a user can specify criteria for producing product ion spectra during a chromatographic run. For example, in an IDA method a precursor or mass spectrometry (MS) survey scan is performed to generate a precursor ion peak list. The user can select criteria to filter the peak list for a subset of the precursor ions on the peak list. The subset of precursor ions is then fragmented and product ion or mass spectrometry/mass spectrometry (MS/MS) spectra are obtained.

In order to detect and identify the modified forms, the IDA generated product ion spectra are compared to the spectra of known compounds. When some of the product ions or neutral losses of an IDA generated product ion spectrum match the spectrum of a known compound, the IDA generated product ion spectrum is further evaluated to determine if it is a modified form.

IDA works well for detecting and identifying modified forms, when the generated product ion spectrum arises from a single precursor ion. In complex mixtures, however, some of the product ion spectra from the IDA method can include product ions from more than one precursor ion. As a result, it is difficult to compare such spectra to the spectra of known compounds.
The invention is defined in the claims.

A system is disclosed for detecting a product ion of a modified form of a known compound of interest in a sample from tandem mass spectrometry data. The system includes a processor that receives a plurality of sample product ion spectra. The plurality of sample product ion spectra are produced by separating known compounds from a sample over time using a separation device, and at each time step, analyzing the known compounds by performing a plurality of product ion scans for a plurality of precursor mass selection windows selected across a mass range of the sample using a tandem mass spectrometer.

The processor retrieves known mass-to-charge ratio (m/z) values of product ions of at least one compound of the known compounds from a memory. The processor generates product ion extracted ion chromatograms (XICs) from product ion spectra of the plurality of sample product ion spectra that include m/z peaks matching the known m/z values. The processor groups XIC peaks of the generated product ion XICs by retention time, producing a plurality of XIC peak groups. The processor selects at least one XIC peak group of the plurality of XIC peak groups. The processor creates an m/z peak list for the at least one XIC peak group by obtaining the m/z value for each monoisotopic peak in each spectrum used to generate the XIC peaks of the at least one XIC peak group. The processor removes from the m/z peak list m/z values that match the known m/z values. For each m/z value remaining in the m/z peak list, the processor calculates an m/z difference between the peak list m/z value and each m/z value of the m/z values of the known product ions, producing a plurality of m/z difference values. The processor groups m/z difference values of the plurality of m/z difference values with same m/z value into groups and counts the number of m/z difference values in each group, producing a plurality of m/z difference value groups that each includes a count. If a count of an m/z difference value group of the plurality of m/z difference value groups exceeds a predetermined count, the processor detects a product ion of a modified form of the at least one compound at the m/z value of the m/z difference value group.

A method is disclosed for detecting a product ion of a modified form of a known compound of interest in a sample from tandem mass spectrometry data. A plurality of sample product ion spectra are received using a processor. The plurality of sample product ion spectra are produced by separating known compounds from a sample over time using a separation device, and at each time step, analyzing the known compounds by performing a plurality of product ion scans for a plurality of precursor mass selection windows selected across a mass range of the sample using a tandem mass spectrometer.

Known m/z values of product ions of at least one compound of the known compounds are retrieved from a memory using the processor. Product ion XICs are generated from product ion spectra of the plurality of sample product ion spectra that include m/z peaks matching the known m/z values using the processor. XIC peaks of the generated product ion XICs are grouped by retention time using the processor, producing a plurality of XIC peak groups. At least one XIC peak group of the plurality of XIC peak groups is selected using the processor.

An m/z peak list is created for the at least one XIC peak group by obtaining the m/z value for each monoisotopic peak in each spectrum used to generate the XIC peaks of the at least one XIC peak group using the processor. m/z values are removed from the m/z peak list that match the known m/z values using the processor. For each m/z value remaining in the m/z peak list, an m/z difference between the peak list m/z value and each m/z value of the m/z values of the known product ions is calculated using the processor, producing a plurality of m/z difference values. m/z difference values of the plurality of m/z difference values with same m/z value are grouped into groups and the number of m/z difference values in each group is counted using the processor, producing a plurality of m/z difference value groups that each includes a count. If a count of an m/z difference value group of the plurality of m/z difference value groups exceeds a predetermined count, a product ion of a modified form of the at least one compound is detected at the m/z value of the m/z difference value group using the processor.

A computer program product is disclosed that includes a non-transitory and tangible computer-readable storage medium whose contents include a program with instructions being executed on a processor so as to perform a method for detecting a product ion of a modified form of a known compound of interest in a sample from tandem mass spectrometry data. The method includes providing a system, wherein the system comprises one or more distinct software modules, and wherein the distinct software modules comprise an analysis module.

The analysis module receives a plurality of sample product ion spectra. The plurality of sample product ion spectra are produced by separating known compounds from a sample over time using a separation device, and at each time step, analyzing the known compounds by performing a plurality of product ion scans for a plurality of precursor mass selection windows selected across a mass range of the sample using a tandem mass spectrometer.

The analysis module retrieves known m/z values of product ions of at least one compound of the known compounds from a memory.

The analysis module generates product ion XICs from product ion spectra of the plurality of sample product ion spectra that include m/z peaks matching the known m/z values.

The analysis module groups XIC peaks of the generated product ion XICs by retention time, producing a plurality of XIC peak groups.

The analysis module selects at least one XIC peak group of the plurality of XIC peak groups.

The analysis module creates an m/z peak list for the at least one XIC peak group by obtaining the m/z value for each monoisotopic peak in each spectrum used to generate the XIC peaks of the at least one XIC peak group.

The analysis module removes from the m/z peak list m/z values that match the known m/z values.

For each m/z value remaining in the m/z peak list, the analysis module calculates an m/z difference between the peak list m/z value and each m/z value of the m/z values of the known product ions, producing a plurality of m/z difference values.

The analysis module groups m/z difference values of the plurality of m/z difference values with same m/z value into groups and counts the number of m/z difference values in each group, producing a plurality of m/z difference value groups that each includes a count.

If a count of an m/z difference value group of the plurality of m/z difference value groups exceeds a predetermined count, the analysis module detects a product ion of a modified form of the at least one compound at the m/z value of the m/z difference value group.

These and other features of the applicant's teachings are set forth herein.

The skilled artisan will understand that the drawings, described below, are for illustration purposes only. The drawings are not intended to limit the scope of the present teachings in any way.
Figure 1 is a block diagram that illustrates a computer system, upon which embodiments of the present teachings may be implemented.
Figure 2 is an exemplary extracted ion chromatogram (XIC) plot produced from a separation coupled data independent acquisition (DIA) tandem mass spectrometry method showing two XIC peak groups for a peptide of interest, in accordance with various embodiments.
Figure 3 is an exemplary spectrum of the product ions present at 48.79 minutes in the XIC plot of Figure 2, in accordance with various embodiments.
Figure 4 is an exemplary spectrum of the product ions present at 44.61 minutes in the XIC plot of Figure 2, in accordance with various embodiments.
Figure 5 is an exemplary plot of groups of delta mass and their counts for an XIC peak group, in accordance with various embodiments.
Figure 6 is a schematic diagram of a system for detecting a product ion of a modified form of a known compound of interest in a sample from tandem mass spectrometry data, in accordance with various embodiments.
Figure 7 is a flowchart showing a method for detecting a product ion of a modified form of a known compound of interest in a sample from tandem mass spectrometry data, in accordance with various embodiments.
Figure 8 is a schematic diagram of a system that includes one or more distinct software modules that performs a method for detecting a product ion of a modified form of a known compound of interest in a sample from tandem mass spectrometry data, in accordance with various embodiments.

Before one or more embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

### COMPUTER-IMPLEMENTED SYSTEM

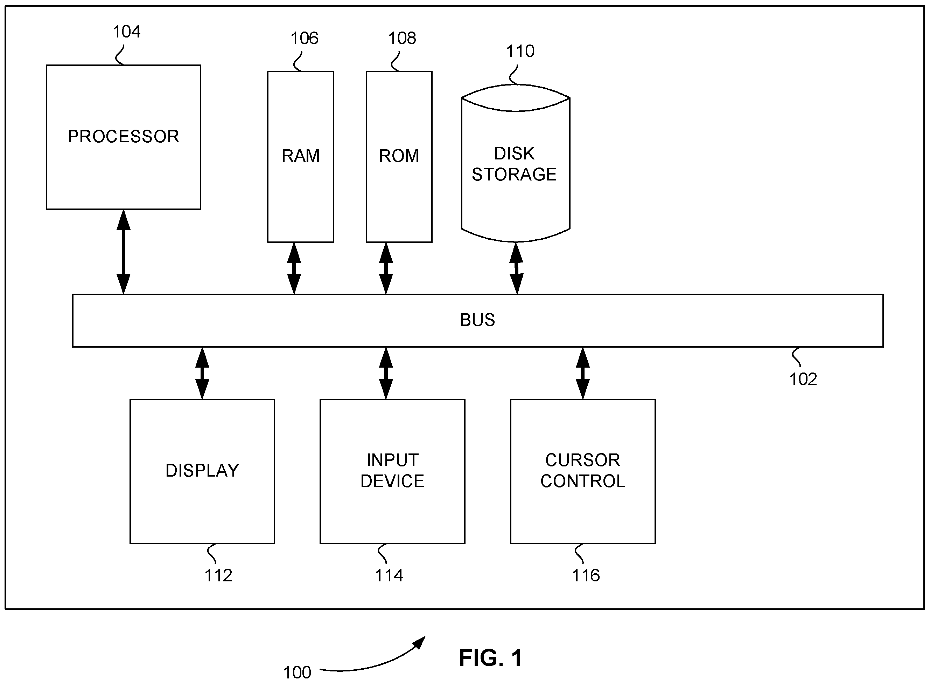

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 112, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 112. This input device typically has two degrees of freedom in two axes, a first axis (*i.e.,* x) and a second axis (*i*.*e*., y), that allows the device to specify positions in a plane.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein. Alternatively hard-wired circuitry may be used in place of or in combination with software instructions to implement the present teachings. Thus implementations of the present teachings are not limited to any specific combination of hardware circuitry and software.

In various embodiments, computer system 100 can be connected to one or more other computer systems, like computer system 100, across a network to form a networked system. The network can include a private network or a public network such as the Internet. In the networked system, one or more computer systems can store and serve the data to other computer systems. The one or more computer systems that store and serve the data can be referred to as servers or the cloud, in a cloud computing scenario. The one or more computer systems can include one or more web servers, for example. The other computer systems that send and receive data to and from the servers or the cloud can be referred to as client or cloud devices, for example.

The term "computer-readable medium" as used herein refers to any media that participates in providing instructions to processor 104 for execution. Such a medium may take many forms, including but not limited to, non-volatile media, volatile media, and transmission media. Non-volatile media includes, for example, optical or magnetic disks, such as storage device 110. Volatile media includes dynamic memory, such as memory 106. Transmission media includes coaxial cables, copper wire, and fiber optics, including the wires that comprise bus 102.

Common forms of computer-readable media or computer program products include, for example, a floppy disk, a flexible disk, hard disk, magnetic tape, or any other magnetic medium, a CD-ROM, digital video disc (DVD), a Bluray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

In accordance with various embodiments, instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

### SYSTEMS AND METHODS FOR DETECTING MODIFIED FORMS

As described above, in many applications, such as proteomics, drug metabolism studies, and forensic studies, it is useful to detect and identify modified forms of a known compound. Traditionally, modified forms are detected and identified using an information dependent acquisition (IDA) method. In complex mixtures, however, some of the product ion spectra from the IDA method can include product ions from more than one precursor ion. As a result, it is difficult to detect and identify modified forms in complex mixtures using IDA.

In various embodiments, modified forms are detected and identified in complex mixtures using extracted ion current or extracted ion chromatogram (XIC) peak profiles obtained from a data independent acquisition (DIA) method, such as ABSciex's MS/MS^{ALL} acquisition method or ABSciex's SWATH™ acquisition method. In MS/MS^{ALL} acquisition, a narrow precursor mass window is stepped across a mass range of interest, and the precursor ions within each precursor mass window are fragmented producing product ions. A narrow mass selection window width is on the order of 1 atomic mass unit (amu), for example. As a result, mass spectra for all the product ions of all the precursor ions of the mass range are obtained. MS/MS^{ALL}acquisition is also called MS/MS of all or MS/MS of everything, for example.

In order to improve sensitivity, ABSciex's SWATH™ acquisition method was developed. In this acquisition method, sensitivity is improved by providing the mass analyzer with a wide precursor mass selection window width. A wide precursor mass selection window width is anything greater than 1 atomic mass unit (amu). However, typically wide precursor mass selection window widths are between 20 amu and 200 amu, for example.

Selecting a wider mass selection window requires fewer fragmentation scans to cover a mass range. For example, a mass range from 200 amu to 600 amu that is scanned using a narrow mass selection window width of 1 amu requires 400 fragmentation scans. Using a wider mass selection window width of 100 amu requires just 4 fragmentation scans. A wider precursor mass selection window is, therefore, used to fragment samples across the entire mass range of interest in order to analyze samples at the rate samples are received from separation or injection devices.

As described above, selecting a wider mass selection window provides greater sensitivity than selecting a narrower mass selection for the first stage of tandem mass spectrometry. However, any loss in specificity can be regained through high resolution detection in the second stage of tandem mass spectrometry. As a result, both high specificity and high sensitivity can be provided by the overall method.

In various embodiments, fragmentation scans occur at uniform or fixed mass selection windows across a mass range. The mass range can include, for example, a preferred mass range of the sample or the entire mass range of the sample.

ABSciex's SWATH™ acquisition method coupled with a separation technique can be used to quantitate compounds. For example, it is possible to detect compounds based on chromatograms of the product ions, which provides additional confidence since the related product ions should all share the same liquid chromatography (LC) profile at the same retention time.

U.S. Patent No. 8,809,770 (hereinafter the "'770 Patent"), describes how ABSciex's SWATH™ acquisition method coupled with a separation technique can be used to quantitate compounds, for example. All of the product ion data acquired from each wide precursor mass selection window is processed together. Even though the data may contain product ions from one or more precursor ions (compounds), it can be processed to quantitate the compound of interest or search. The precursor mass of the compound of interest and a set of expected product ions at high resolution and mass accuracy are obtained from a library, or by analyzing an authentic standard form of the compound, or obtained from a previous analysis (whether the compounds are known or not), or by prediction using known fragmentation rules, for example. The set of product ions can be selected based on their expected intensity, the likelihood that they are unique to the compound of interest, or other features. For the window(s) containing the expected precursor mass, the set of product ion masses are used to generate ion traces, for example chromatograms or XICs that include one or more peaks.

The XICs are scored to determine the correct or most likely peak. The score can be based on information from the mass spectrum such as: how well the detected mass of the sample fragment ions match the expected masses of the predetermined product ions; how well the relative intensities of the sample product ions match the relative intensities of the predetermined product ions; that the measured sample ions are in the correct isotopic form, usually that they are monoisotopic; and that the precursor and fragment ions have the expected charge state, for example.

If a separation step is included, the score can be based on additional information such as: how well the detected ion traces match each other in shape and position. If different isotopic forms of the sample are analyzed, such as a combination of labeled and native forms, data from the different forms can be used to further refine the score. If one or more product ions in the set receive poor scores because there is an interference, they can be excluded from the set and, if desired, replaced with another fragment from the predetermined spectrum.

Product ions that receive acceptable scores can be used to generate quantitative values for the target compound that can be compared to similar values from other samples, such as members of a time course study, groups of samples that have been treated or prepared differently, groups of samples from healthy or diseased subjects, etc.

The '770 Patent also describes using ABSciex's SWATH™ acquisition method to detect modified forms. Modified forms are detected by locating the same set of product ions at unexpected retention times in the same precursor window or in different windows, for example. In other words, a modified form is detected if the same set of product ions known to be in the compound of interest are found at an unexpected retention time.

Once a modified form is detected the type and location of the modification is determined by predicting ions that depend on the position or type of the modification and generating and scoring traces extracted from the data for those predicted masses. In other words, once a modification is detected at a retention time, modification product ion masses are predicted and traces or XICs are generated for similar masses found at the retention time.

Further, the '770 Patent provides that the modified form is identified by finding a mass corresponding to the one or more matching sample product ions adjusted by the mass of one or more modifications. The '770 Patent, however, provides no systematic method of finding the mass corresponding to the one or more matching sample product ions adjusted by the mass of one or more modifications.

In various embodiments, a modified form of a known compound is detected from an XIC peak group produced by a separation coupled DIA tandem mass spectrometry method by systematically examining product ions in the XIC peak group that do not have the same masses as the product ions from the unmodified known compound. In other words, measured product ions known not to be the product ions of the unmodified compound of interest are specifically examined for modified forms.

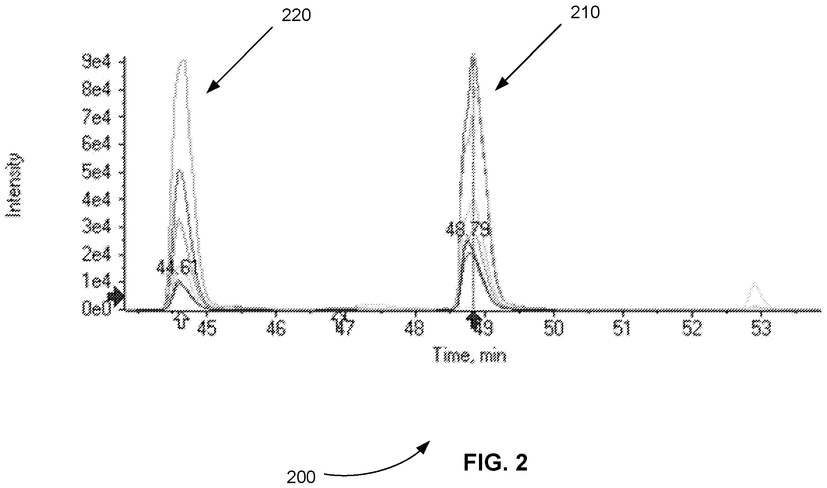

Figure 2 is an exemplary extracted ion chromatogram (XIC) plot produced from a separation coupled data independent acquisition (DIA) tandem mass spectrometry method showing two XIC peak groups for a peptide of interest, in accordance with various embodiments. XIC peak group 210 has retention time of 48.79 minutes and XIC peak group 220 has retention time of 44.61 minutes. Each peak group includes multiple XIC peaks. XIC peak group 210 is the peak group of the unmodified peptide of interest, for example. XIC peak group 220 is an unknown peak group, for example. XIC peak groups 210 and 220 are created by a peaking finding algorithm of a DIA method, such as ABSciex's SWATH™ acquisition method, for example. This peaking finding algorithm typically assigns a score to XIC peak groups 210 and 220 as described above.

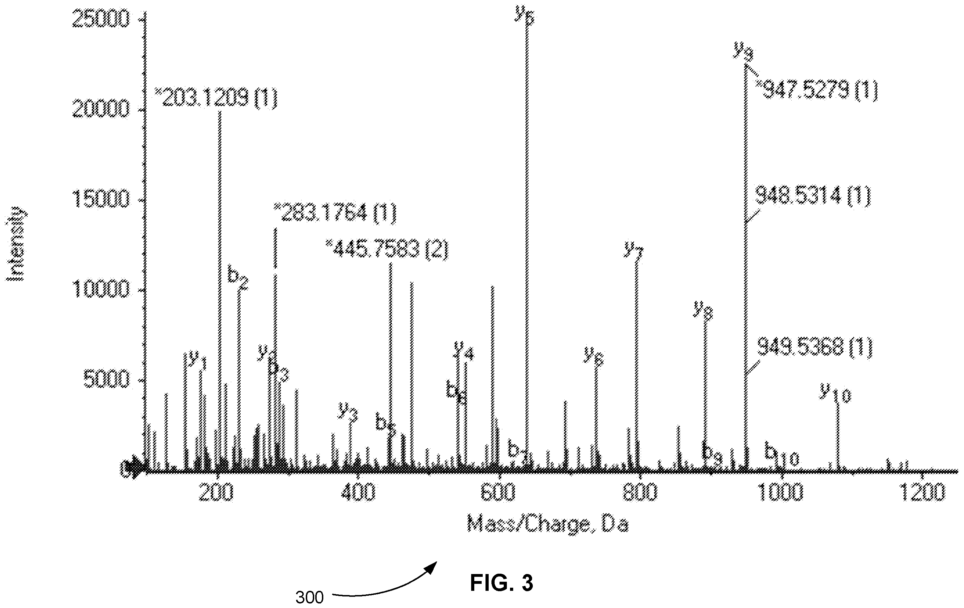

Figure 3 is an exemplary spectrum 300 of the product ions present at 48.79 minutes in the XIC plot of Figure 2, in accordance with various embodiments. Spectrum 300, therefore, shows the product ions of XIC peak group 210 in Figure 2. On comparison with the theoretical product ions of the peptide of interest, spectrum 300 shows good matches with both b and y ions.

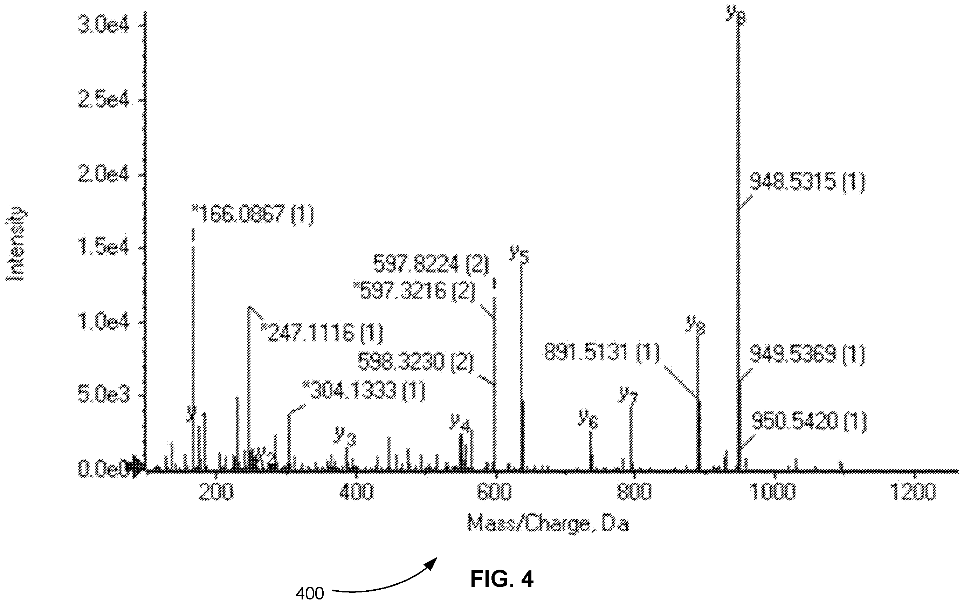

Figure 4 is an exemplary spectrum 400 of the product ions present at 44.61 minutes in the XIC plot of Figure 2, in accordance with various embodiments. Spectrum 400, therefore, shows the product ions of XIC peak group 220 in Figure 2. On comparison with the theoretical product ions of the peptide of interest, spectrum 400 shows only good matches with y ions.

Returning to Figure 2, in various embodiments, modified forms are found from XIC peak groups by first selecting an XIC peak group. XIC peak group 220 is selected, for example. The selection may be based on the score of the XIC peak group and/or the retention time of the XIC peak group, for example.

The monoisotopic spectral peaks of the selected peak group are then obtained, producing a peak list for the XIC peak group. For example, 94 monoisotopic peaks are obtained from spectrum 400 of Figure 4, which is spectrum for peak group 220 of Figure 2.

Next, the monoisotopic spectral peaks of the selected peak group are compared to the theoretical product ions of the peptide of interest. Peaks that match the theoretical product ions of the peptide of interest are removed from the peak list. For example, 15 peaks in spectrum 400 of Figure 4 are found to match the theoretical product ions of the peptide of interest. As a result, these 15 peaks in spectrum 400 of Figure 4 are removed from the peak list leaving a total of 79 peaks (94 - 15 = 79).

The mass of each remaining peak on the peak list is then compared to each mass of each theoretical product ion of the peptide of interest and each delta mass is stored. For example, if the peptide of interest has 22 theoretical b and y ion product ions, then the mass of each of the 79 peaks on the peak list is compared to each mass of the 22 theoretical b and y ion product ions. As a result, 1738 (22 × 79 = 1738) delta masses are recorded for peak group 220 of Figure 2, for example.

The delta masses are then grouped by mass and counted. In other words, delta masses that have the same mass value are grouped together and the count of delta masses in each group is counted.

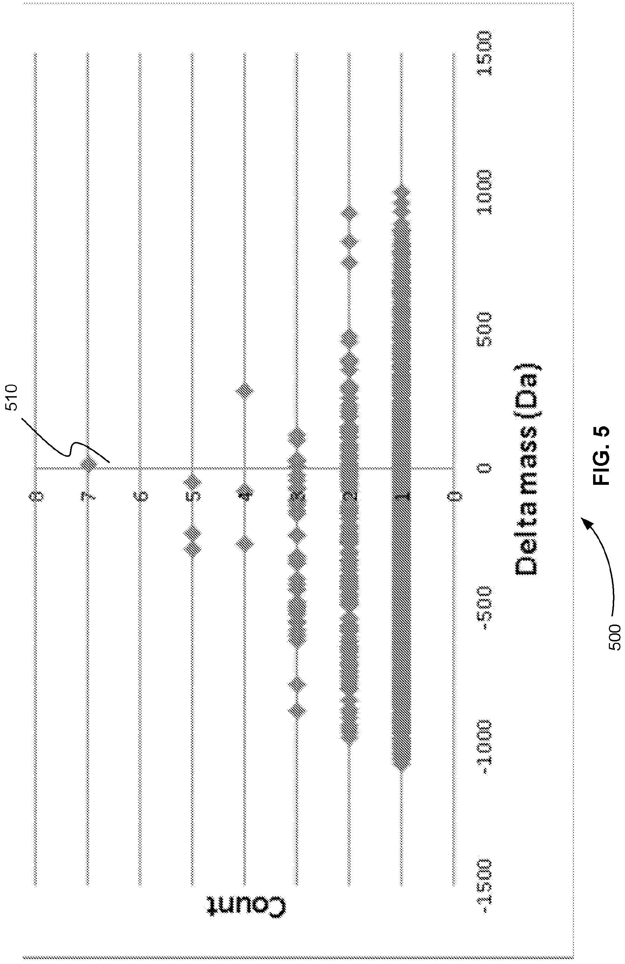

Figure 5 is an exemplary plot 500 of groups of delta mass and their counts for an XIC peak group, in accordance with various embodiments. Plot 500 shows groups of delta mass for peak group 220 of Figure 2. In grouping the 1738 delta masses by mass value, 1464 delta mass groups were created.

Finally, delta mass groups with the highest count are evaluated as potential modifications. In other words, delta mass groups with a count above a predetermined threshold are selected for evaluation as potential indicators of modified forms. If the threshold is six, for example, delta mass group 510, which has a count of seven is the only delta mass group with a count above six. Therefore, delta mass group 510 would be the only delta mass group evaluated for potential modifications. One of skill in the art can appreciate that any count threshold can be selected.

Once one or more delta mass groups are selected based on count, their masses are evaluated for possible modifications. For example, the mass value of delta mass group 510 is + 15.99660 Da. This + 15.99660 Da delta mass may potentially be an oxidation modification, which has a mass shift of +15.99491 Da.

### System For Detecting A Product Ion Of A Modified Form

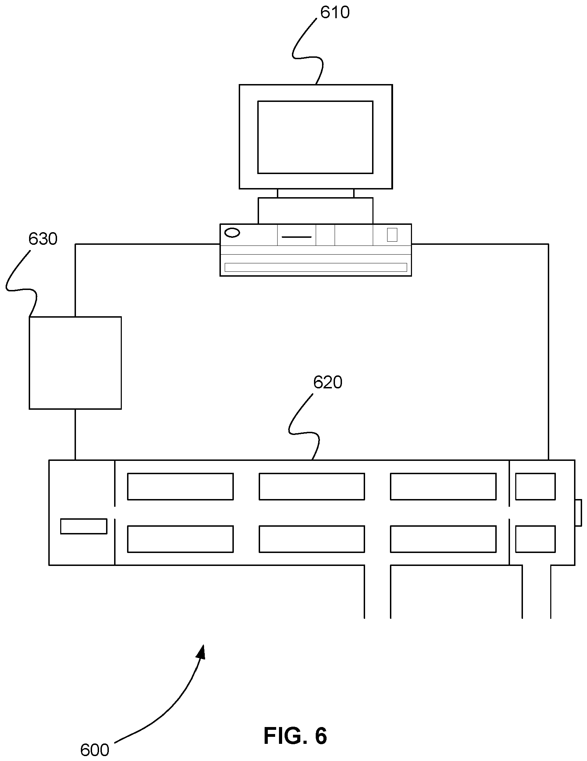

Figure 6 is a schematic diagram of system 600 for detecting a product ion of a modified form of a known compound of interest in a sample from tandem mass spectrometry data, in accordance with various embodiments. System 600 includes processor 610. Processor 610 can be, but is not limited to, a computer, microprocessor, the computer system of Figure 1, or any device capable of processing data and sending and receiving data.

Processor 610 receives a plurality of sample product ion spectra from tandem mass spectrometer 620, for example. Tandem mass spectrometer 620 can include one or more physical mass analyzers that perform two or more mass analyses. A mass analyzer of a tandem mass spectrometer can include, but is not limited to, a TOF, a quadrupole, an ion trap, a linear ion trap, an orbitrap, or a Fourier transform mass analyzer. Processor 610 can receive the plurality of sample product ion spectra during mass analysis of the sample or after mass analysis of the sample.

The plurality of sample product ion spectra are produced by first separating known compounds in the sample over time using separation device 630. Then, at each time step of a plurality of time steps, the separating known compounds are analyzed by performing a plurality of product ion scans for a plurality of precursor mass selection windows selected across a mass range of the sample using tandem mass spectrometer 620. Separation device 630 can perform a separation technique that includes, but is not limited to, liquid chromatography, gas chromatography, or any other separation technique that separates compounds over time. In various embodiments, the known compounds can include, but are not limited to, peptides, administered drugs, or drugs of abuse.

Processor 610 retrieves known mass-to-charge ratio (m/z) values of product ions of at least one compound of the known compounds from a memory. The memory can include any type of electronic, magnetic, or optical memory accessible by processor 610. The known m/z values of the product ions of at least one compound can be part of a database or library of known m/z values of product ions of known compounds, for example. In various embodiments, if the at least one compound is a peptide, the product ions of the at least one compound include b and y product ions.

Processor 610 generates product ion XICs from product ion spectra of the plurality of sample product ion spectra that include m/z peaks matching the known m/z values. In various embodiments, processor 610 further calculates a score for each XIC peak in the generated product ion XICs. Processor 610 groups XIC peaks of the generated product ion XICs by retention time, producing a plurality of XIC peak groups.

Processor 610 selects at least one XIC peak group of the plurality of XIC peak groups. In various embodiments, the at least one XIC peak group is selected based on a retention time of the at least one XIC peak group. In various embodiments, the at least one XIC peak group is selected based on the combined scores of XIC peaks in the at least one XIC peak group.

Processor 610 creates an m/z peak list for the at least one XIC peak group by obtaining the m/z value for each monoisotopic peak in each spectrum used to generate the XIC peaks of the at least one XIC peak group. Processor 610 removes from the m/z peak list m/z values that match the known m/z values. For each m/z value remaining in the m/z peak list, processor 610 calculates an m/z difference between the peak list m/z value and each m/z value of the m/z values of the known product ions, producing a plurality of m/z difference values. These m/z difference values are equivalent to the delta masses described above, for example.

Processor 610 groups m/z difference values of the plurality of m/z difference values with same m/z value into groups and counts the number of m/z difference values in each group, producing a plurality of m/z difference value groups that each includes a count. Finally, if a count of an m/z difference value group of the plurality of m/z difference value groups exceeds a predetermined count, processor 610 detects a product ion of a modified form of the at least one compound at the m/z value of the m/z difference value group.

### Method For Detecting A Product Ion Of A Modified Form

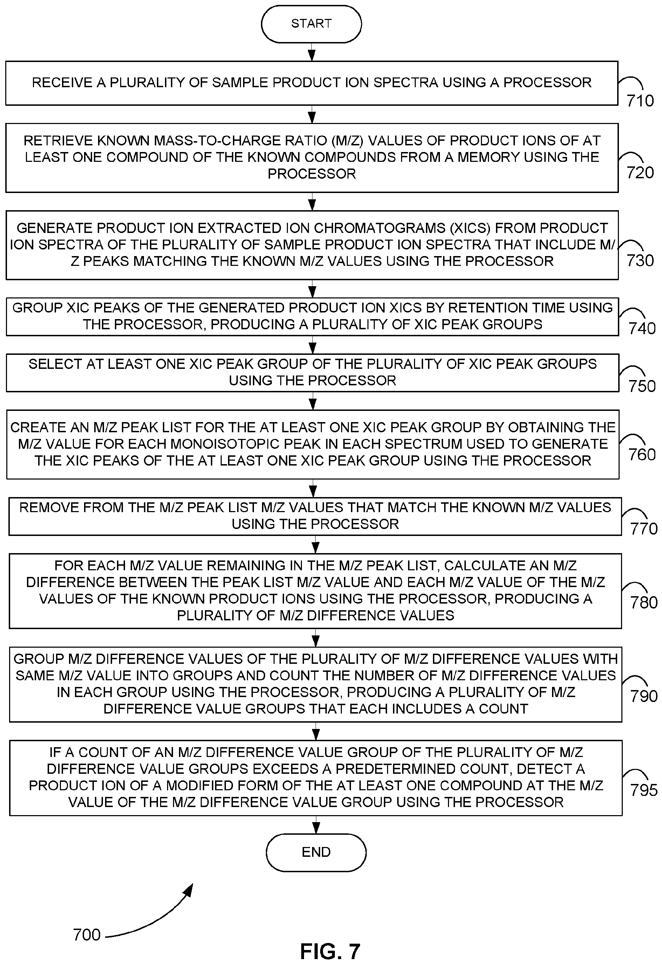

Figure 7 is a flowchart showing a method 700 for detecting a product ion of a modified form of a known compound of interest in a sample from tandem mass spectrometry data, in accordance with various embodiments.

In step 710 of method 700, a plurality of sample product ion spectra are received using a processor. The plurality of sample product ion spectra are produced by separating known compounds from a sample over time using a separation device, and at each time step, analyzing the known compounds by performing a plurality of product ion scans for a plurality of precursor mass selection windows selected across a mass range of the sample using a tandem mass spectrometer.

In step 720, known m/z values of product ions of at least one compound of the known compounds are retrieved from a memory using the processor.

In step 730, product ion extracted ion chromatograms (XICs) are generated from product ion spectra of the plurality of sample product ion spectra that include m/z peaks matching the known m/z values using the processor.

In step 740, XIC peaks of the generated product ion XICs are grouped by retention time using the processor, producing a plurality of XIC peak groups.

In step 750, at least one XIC peak group of the plurality of XIC peak groups is selected using the processor.

In step 760, an m/z peak list is created for the at least one XIC peak group by obtaining the m/z value for each monoisotopic peak in each spectrum used to generate the XIC peaks of the at least one XIC peak group using the processor.

In step 770, m/z values are removed from the m/z peak list that match the known m/z values using the processor.

In step 780, for each m/z value remaining in the m/z peak list, an m/z difference between the peak list m/z value and each m/z value of the m/z values of the known product ions is calculated using the processor, producing a plurality of m/z difference values.

In step 790, m/z difference values of the plurality of m/z difference values with same m/z value are grouped into groups and the number of m/z difference values in each group is counted using the processor, producing a plurality of m/z difference value groups that each includes a count.

In step 795, if a count of an m/z difference value group of the plurality of m/z difference value groups exceeds a predetermined count, a product ion of a modified form of the at least one compound is detected at the m/z value of the m/z difference value group using the processor.

### Computer Program Product For Detecting A Product Ion OfA Modified Form

In various embodiments, computer program products include a tangible computer-readable storage medium whose contents include a program with instructions being executed on a processor so as to perform a method for detecting a product ion of a modified form of a known compound of interest in a sample from tandem mass spectrometry data. This method is performed by a system that includes one or more distinct software modules.

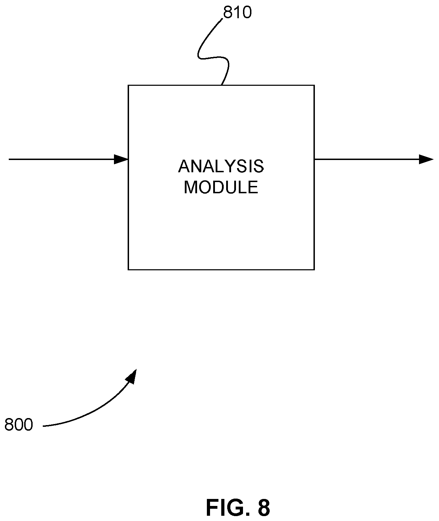

Figure 8 is a schematic diagram of a system 800 that includes one or more distinct software modules that performs a method for detecting a product ion of a modified form of a known compound of interest in a sample from tandem mass spectrometry data, in accordance with various embodiments. System 800 includes analysis module 810.

Analysis module 810 receives a plurality of sample product ion spectra. The plurality of sample product ion spectra are produced by separating known compounds from a sample over time using a separation device, and, at each time step of a plurality of time steps, analyzing the known compounds by performing a plurality of product ion scans for a plurality of precursor mass selection windows selected across a mass range of the sample using a tandem mass spectrometer.

Analysis module 810 retrieves known m/z values of product ions of at least one compound of the known compounds from a memory. Analysis module 810 generates product ion XICs from product ion spectra of the plurality of sample product ion spectra that include m/z peaks matching the known m/z values. Analysis module 810 groups XIC peaks of the generated product ion XICs by retention time, producing a plurality of XIC peak groups. Analysis module 810 selects at least one XIC peak group of the plurality of XIC peak groups.

Analysis module 810 creates an m/z peak list for the at least one XIC peak group by obtaining the m/z value for each monoisotopic peak in each spectrum used to generate the XIC peaks of the at least one XIC peak group. Analysis module 810 removes from the m/z peak list m/z values that match the known m/z values. For each m/z value remaining in the m/z peak list, analysis module 810 calculates an m/z difference between the peak list m/z value and each m/z value of the m/z values of the known product ions, producing a plurality of m/z difference values.

Analysis module 810 groups m/z difference values of the plurality of m/z difference values with same m/z value into groups and counts the number of m/z difference values in each group, producing a plurality of m/z difference value groups that each includes a count. Finally, if a count of an m/z difference value group of the plurality of m/z difference value groups exceeds a predetermined count, analysis module 810 detects a product ion of a modified form of the at least one compound at the m/z value of the m/z difference value group.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the scope of the various embodiments.

## Claims

1. A system for detecting a product ion of a modified form of a known compound of interest in a sample from tandem mass spectrometry data, comprising:
a processor that
(a) receives a plurality of sample product ion spectra produced by separating known compounds from a sample over time using a separation device, and at each time step, analyzing the known compounds by performing a plurality of product ion scans for a plurality of precursor mass selection windows selected across a mass range of the sample using a tandem mass spectrometer,
(b) retrieves known mass-to-charge ratio (m/z) values of product ions of at least one compound of the known compounds from a memory,
(c) generates product ion extracted ion chromatograms (XICs) from product ion spectra of the plurality of sample product ion spectra that include m/z peaks matching the known m/z values,
(d) groups XIC peaks of the generated product ion XICs by retention time, producing a plurality of XIC peak groups,
(e) selects at least one XIC peak group of the plurality of XIC peak groups,
(f) creates an m/z peak list for the at least one XIC peak group by obtaining the m/z value for each monoisotopic peak in each spectrum used to generate the XIC peaks of the at least one XIC peak group,
(g) removes from the m/z peak list m/z values that match the known m/z values,
(h) for each m/z value remaining in the m/z peak list, calculates an m/z difference between the peak list m/z value and each m/z value of the m/z values of the known product ions, producing a plurality of m/z difference values,
(i) groups m/z difference values of the plurality of m/z difference values with same m/z value into groups and counts the number of m/z difference values in each group, producing a plurality of m/z difference value groups that each includes a count, and
(j) if a count of an m/z difference value group of the plurality of m/z difference value groups exceeds a predetermined count, detects a product ion of a modified form of the at least one compound at the m/z value of the m/z difference value group.

2. The system of claim 1, wherein the at least one compound comprises a peptide.

3. The system of claim 2, wherein the known m/z values of product ions of at least one compound comprise m/z values of b and y ions.

4. The system of claim 1, wherein the at least one compound comprises an administered drug.

5. The system of claim 1, wherein the at least one compound comprises a drug of abuse.

6. The system of claim 1, wherein the processor selects the at least one XIC peak group based on a retention time of the at least one XIC peak group.

7. The system of claim 1, wherein the processor further calculates a score for each generated XIC peak.

8. The system of claim 7, wherein the processor selects the at least one XIC peak group based on the combined scores of XIC peaks in the at least one XIC peak group.

9. A method for detecting a product ion of a modified form of a known compound of interest in a sample from tandem mass spectrometry data, comprising:
(a) receiving a plurality of sample product ion spectra using a processor, wherein the plurality of sample product ion spectra are produced by separating known compounds from a sample over time using a separation device, and at each time step, analyzing the known compounds by performing a plurality of product ion scans for a plurality of precursor mass selection windows selected across a mass range of the sample using a tandem mass spectrometer;
(b) retrieving known mass-to-charge ratio (m/z) values of product ions of at least one compound of the known compounds from a memory using the processor;
(c) generating product ion extracted ion chromatograms (XICs) from product ion spectra of the plurality of sample product ion spectra that include m/z peaks matching the known m/z values using the processor;
(d) grouping XIC peaks of the generated product ion XICs by retention time using the processor, producing a plurality of XIC peak groups;
(e) selecting at least one XIC peak group of the plurality of XIC peak groups using the processor;
(f) creating an m/z peak list for the at least one XIC peak group by obtaining the m/z value for each monoisotopic peak in each spectrum used to generate the XIC peaks of the at least one XIC peak group using the processor;
(g) removing from the m/z peak list m/z values that match the known m/z values using the processor;
(h) for each m/z value remaining in the m/z peak list, calculating an m/z difference between the peak list m/z value and each m/z value of the m/z values of the known product ions using the processor, producing a plurality of m/z difference values;
(i) grouping m/z difference values of the plurality of m/z difference values with same m/z value into groups and counting the number of m/z difference values in each group using the processor, producing a plurality of m/z difference value groups that each includes a count; and
(j) if a count of an m/z difference value group of the plurality of m/z difference value groups exceeds a predetermined count, detecting a product ion of a modified form of the at least one compound at the m/z value of the m/z difference value group using the processor.

10. The method of claim 9, wherein the at least one compound comprises a peptide.

11. The method of claim 10, wherein the known m/z values of product ions of at least one compound comprise m/z values of b and y ions.

12. The method of claim 9, wherein the selection in step (e) is based on a retention time of the at least one XIC peak group.

13. The method of claim 9, further comprising calculating a score for each XIC peak generated in step (c).

14. The method of claim 13, wherein the selection in step (e) is based on the combined scores of XIC peaks in the at least one XIC peak group.

15. A computer program product, comprising a non-transitory and tangible computer-readable storage medium whose contents include a program with instructions being executed on a processor so as to perform a method for detecting a product ion of a modified form of a known compound of interest in a sample from tandem mass spectrometry data, the method comprising:
(a) providing a system, wherein the system comprises one or more distinct software modules, and wherein the distinct software modules comprise an analysis module;
(b) receiving a plurality of sample product ion spectra using the analysis module,
wherein the plurality of sample product ion spectra are produced by separating known compounds from a sample over time using a separation device, and at each time step, analyzing the known compounds by performing a plurality of product ion scans for a plurality of precursor mass selection windows selected across a mass range of the sample using a tandem mass spectrometer;
(c) retrieving known mass-to-charge ratio (m/z) values of product ions of at least one compound of the known compounds from a memory using the analysis module;
(d) generating product ion extracted ion chromatograms (XICs) from product ion spectra of the plurality of sample product ion spectra that include m/z peaks matching the known m/z values using the analysis module;
(e) grouping XIC peaks of the generated product ion XICs by retention time using the analysis module, producing a plurality of XIC peak groups;
(f) selecting at least one XIC peak group of the plurality of XIC peak groups using the analysis module;
(g) creating an m/z peak list for the at least one XIC peak group by obtaining the m/z value for each monoisotopic peak in each spectrum used to generate the XIC peaks of the at least one XIC peak group using the analysis module;
(h) removing from the m/z peak list m/z values that match the known m/z values using the analysis module;
(i) for each m/z value remaining in the m/z peak list, calculating an m/z difference between the peak list m/z value and each m/z value of the m/z values of the known product ions using the analysis module, producing a plurality of m/z difference values;
(j) grouping m/z difference values of the plurality of m/z difference values with same m/z value into groups and counting the number of m/z difference values in each group using the analysis module, producing a plurality of m/z difference value groups that each includes a count; and
(k) if a count of an m/z difference value group of the plurality of m/z difference value groups exceeds a predetermined count, detecting a product ion of a modified form of the at least one compound at the m/z value of the m/z difference value group using the analysis module.

## Patentansprüche

1. System zum Erfassen eines Produktions einer modifizierten Form einer bekannten Verbindung von Interesse in einer Probe aus Tandem-Massenspektrometriedaten, umfassend:
einen Prozessor, der
(a) eine Vielzahl von Musterproduktionenspektren empfängt, die durch Trennen bekannter Verbindungen von einer Probe im Laufe der Zeit unter Verwendung einer Trennvorrichtung und zu jedem Zeitschritt Analysieren der bekannten Verbindungen durch Durchführen einer Vielzahl von Produktionenscans für eine Vielzahl von Vorläufer-Massenauswahlfenstern, ausgewählt aus einem Massenbereich der Probe unter Verwendung eines Tandem-Massenspektrometers, hergestellt werden,
(b) bekannte Masse-zu-Ladung-Verhältnis (m/z)-Werte von Produktionen von mindestens einer Verbindung der bekannten Verbindungen aus einem Speicher abruft,
(c) extrahierte Produktion-Ionenchromatogramme (XICs) aus Produktionenspektren aus der Vielzahl von Musterproduktionenspektren, die m/z-Peaks beinhalten, die mit den bekannten m/z-Werten übereinstimmen, erzeugt,
(d) XIC-Peaks der erzeugten Produktion-XICs nach Verweildauer gruppiert, wodurch eine Vielzahl von XIC-Peakgruppen erzeugt werden,
(e) mindestens eine XIC-Peakgruppe aus der Vielzahl von XIC-Peakgruppen auswählt,
(f) eine m/z-Peakliste für die mindestens eine XIC-Peakgruppe durch Erhalten des m/z-Werts für jeden monoisotopischen Peak in jedem Spektrum, das verwendet wird, um die XIC-Peaks für die mindestens eine XIC-Peakgruppe zu erzeugen, erstellt
(g) m/z Werte, die mit den bekannten m/z-Werten übereinstimmen, aus der m/z-Peakliste entfernt,
(h) für jeden m/z-Wert, der in der m/z-Peakliste bleibt, eine m/z-Differenz zwischen dem m/z-Wert der Peakliste und jedem m/z-Wert der m/z-Werte der bekannten Produktionen berechnet, wodurch eine Vielzahl von m/z-Differenzwerten hergestellt werden,
(i) m/z-Differenzwerte der Vielzahl von m/z-Differenzwerten mit dem gleichen m/z-Wert in Gruppen gruppiert und die Anzahl von m/z-Differenzwerten in jeder Gruppe zählt, wodurch eine Vielzahl von m/z-Differenzwertgruppen hergestellt werden, die jeweils eine Zählung beinhaltet, und
(j) wenn eine Zählung einer m/z-Differenzwertgruppe aus der Vielzahl von m/z-Differenzwertgruppen eine vorbestimmte Zählung übersteigt, ein Produktion einer modifizierten Form aus der mindestens einen Verbindung mit dem m/z-Wert aus der m/z-Differenzwertgruppe erfasst.

2. System nach Anspruch 1, wobei die mindestens eine Verbindung ein Peptid umfasst.

3. System nach Anspruch 2, wobei die bekannten m/z-Werte von Produktionen aus mindestens einer Verbindung m/z-Werte aus b- und y-Ionen umfassen.

4. System nach Anspruch 1, wobei die mindestens eine Verbindung ein verabreichtes Arzneimittel umfasst.

5. System nach Anspruch 1, wobei die mindestens eine Verbindung eine Droge umfasst.

6. System nach Anspruch 1, wobei der Prozessor die mindestens eine XIC-Peakgruppe basierend auf einer Verweildauer der mindestens einen XIC-Peakgruppe auswählt.

7. System nach Anspruch 1, wobei der Prozessor ferner eine Punktzahl für jeden erzeugten XIC-Peak berechnet.

8. System nach Anspruch 7, wobei der Prozessor die mindestens eine XIC-Peakgruppe basierend auf den kombinierten Punktzahlen von XIC-Peaks in der mindestens einen XIC-Peakgruppe auswählt.

9. Verfahren zum Erfassen eines Produktions einer modifizierten Form einer bekannten Verbindung von Interesse in einer Probe aus Tandem-Massenspektrometriedaten, umfassend:
(a) Empfangen einer Vielzahl von Musterproduktionenspektren unter Verwendung eines Prozessors, wobei die Vielzahl von Musterproduktionenspektren durch Trennen bekannter Verbindungen von einer Probe im Laufe der Zeit unter Verwendung einer Trennvorrichtung und zu jedem Zeitschritt Analysieren der bekannten Verbindungen durch Durchführen einer Vielzahl von Produktionenscans für eine Vielzahl von Vorläufer-Massenauswahlfenstern, ausgewählt aus einem Massenbereich der Probe unter Verwendung eines Tandem-Massenspektrometers, hergestellt werden,
(b) Abrufen bekannter Masse-zu-Ladung-Verhältnis (m/z)-Werte von Produktionen von mindestens einer Verbindung der bekannten Verbindungen aus einem Speicher unter Verwendung des Prozessors;
(c) Erzeugen von extrahierten Produktion-Ionenchromatogrammen (XICs) aus Produktionenspektren aus der Vielzahl von Musterproduktionenspektren, die m/z-Peaks beinhalten, die mit den bekannten m/z-Werten übereinstimmen, unter Verwendung des Prozessors;
(d) Gruppieren von XIC-Peaks der erzeugten Produktion-XICs nach Verweildauer unter Verwendung des Prozessors, wodurch eine Vielzahl von XIC-Peakgruppen erzeugt werden;
(e) Auswählen von mindestens einer XIC-Peakgruppe aus der Vielzahl von XIC-Peakgruppen unter Verwendung des Prozessors;
(f) Erstellen einer m/z-Peakliste für die mindestens eine XIC-Peakgruppe durch Erhalten des m/z-Werts für jeden monoisotopischen Peak in jedem Spektrum, das verwendet wird, um die XIC-Peaks für die mindestens eine XIC-Peakgruppe zu erzeugen, unter Verwendung des Prozessors;
(g) Entfernen von m/z Werten, die mit den bekannten m/z-Werten übereinstimmen, aus der m/z-Peakliste unter Verwendung des Prozessors;
(h) für jeden m/z-Wert, der in der m/z-Peakliste bleibt, Berechnen einer m/z-Differenz zwischen dem m/z-Wert der Peakliste und jedem m/z-Wert der m/z-Werte der bekannten Produktionen unter Verwendung des Prozessors, wodurch eine Vielzahl von m/z-Differenzwerten hergestellt werden;
(i) Gruppieren von m/z-Differenzwerten der Vielzahl von m/z-Differenzwerten mit dem gleichen m/z-Wert in Gruppen und Zählen der Anzahl von m/z-Differenzwerten in jeder Gruppe unter Verwendung des Prozessors, wodurch eine Vielzahl von m/z-Differenzwertgruppen hergestellt werden, die jeweils eine Zählung beinhaltet; und
(j) wenn eine Zählung einer m/z-Differenzwertgruppe aus der Vielzahl von m/z-Differenzwertgruppen eine vorbestimmte Zählung übersteigt, Erfassen eines Produktions einer modifizierten Form aus der mindestens einen Verbindung mit dem m/z-Wert aus der m/z-Differenzwertgruppe unter Verwendung des Prozessors.

10. Verfahren nach Anspruch 9, wobei die mindestens eine Verbindung ein Peptid umfasst.

11. Verfahren nach Anspruch 10, wobei die bekannten m/z-Werte von Produktionen aus mindestens einer Verbindung m/z-Werte aus b- und y-Ionen umfassen.

12. Verfahren nach Anspruch 9, wobei die Auswahl in Schritt (e) auf einer Verweildauer der mindestens einen XIC-Peakgruppe basiert.

13. Verfahren nach Anspruch 9, ferner umfassend das Berechnen einer Punktzahl für jeden XIC-Peak, der in Schritt (c) erzeugt wird.

14. Verfahren nach Anspruch 13, wobei die Auswahl in Schritt (e) auf den kombinierten Punktzahlen von XIC-Peaks in der mindestens einen XIC-Peakgruppe basiert.

15. Computerprogrammprodukt, umfassend ein nicht-flüchtiges und materielles computerlesbares Speichermedium, dessen Inhalte ein Programm mit Anweisungen beinhalten, die auf einem Prozessor ausgeführt werden, um ein Verfahren zum Erfassen eines Produktions einer modifizierten Form einer bekannten Verbindung von Interesse in einer Probe aus Tandem-Massenspektrometriedaten durchzuführen, wobei das Verfahren Folgendes umfasst:
(a) Bereitstellen eines Systems, wobei das System ein oder mehrere verschiedene Softwaremodule umfasst und wobei die verschiedenen Softwaremodule ein Analysemodul umfassen;
(b) Empfangen einer Vielzahl von Musterproduktionenspektren unter Verwendung des Analysemoduls, wobei die Vielzahl von Musterproduktionenspektren durch Trennen bekannter Verbindungen von einer Probe im Laufe der Zeit unter Verwendung einer Trennvorrichtung und zu jedem Zeitschritt Analysieren der bekannten Verbindungen durch Durchführen einer Vielzahl von Produktionenscans für eine Vielzahl von Vorläufer-Massenauswahlfenstern, ausgewählt aus einem Massenbereich der Probe unter Verwendung eines Tandem-Massenspektrometers, hergestellt werden,
(c) Abrufen bekannter Masse-zu-Ladung-Verhältnis (m/z)-Werte von Produktionen von mindestens einer Verbindung der bekannten Verbindungen aus einem Speicher unter Verwendung des Analysemoduls;
(d) Erzeugen von extrahierten Produktion-Ionenchromatogrammen (XICs) aus Produktionenspektren aus der Vielzahl von Musterproduktionenspektren, die m/z-Peaks beinhalten, die mit den bekannten m/z-Werten übereinstimmen, unter Verwendung des Analysemoduls;
(e) Gruppieren von XIC-Peaks der erzeugten Produktion-XICs nach Verweildauer unter Verwendung des Analysemoduls, wodurch eine Vielzahl von XIC-Peakgruppen erzeugt werden;
(f) Auswählen von mindestens einer XIC-Peakgruppe aus der Vielzahl von XIC-Peakgruppen unter Verwendung des Analysemoduls;
(g) Erstellen einer m/z-Peakliste für die mindestens eine XIC-Peakgruppe durch Erhalten des m/z-Werts für jeden monoisotopischen Peak in jedem Spektrum, das verwendet wird, um die XIC-Peaks für die mindestens eine XIC-Peakgruppe zu erzeugen, unter Verwendung des Analysemoduls;
(h) Entfernen von m/z Werten, die mit den bekannten m/z-Werten übereinstimmen, aus der m/z-Peakliste unter Verwendung des Analysemoduls;
(i) für jeden m/z-Wert, der in der m/z-Peakliste bleibt, Berechnen einer m/z-Differenz zwischen dem m/z-Wert der Peakliste und jedem m/z-Wert der m/z-Werte der bekannten Produktionen unter Verwendung des Analysemoduls, wodurch eine Vielzahl von m/z-Differenzwerten hergestellt werden;
(j) Gruppieren von m/z-Differenzwerten der Vielzahl von m/z-Differenzwerten mit dem gleichen m/z-Wert in Gruppen und Zählen der Anzahl von m/z-Differenzwerten in jeder Gruppe unter Verwendung des Analysemoduls, wodurch eine Vielzahl von m/z-Differenzwertgruppen hergestellt werden, die jeweils eine Zählung beinhaltet; und
(k) wenn eine Zählung einer m/z-Differenzwertgruppe aus der Vielzahl von m/z-Differenzwertgruppen eine vorbestimmte Zählung übersteigt, Erfassen eines Produktions einer modifizierten Form aus der mindestens einen Verbindung mit dem m/z-Wert aus der m/z-Differenzwertgruppe unter Verwendung des Analysemoduls.

## Revendications

1. Système permettant de détecter un ion produit de forme modifiée d'un composé d'intérêt connu dans un échantillon à partir de données de spectrométrie de masse en tandem, comprenant :
un processeur qui
(a) reçoit une pluralité de spectres d'ions produits d'échantillon produits par la séparation de composés connus d'un échantillon dans le temps à l'aide d'un dispositif de séparation, et à chaque étape temporelle, l'analyse des composés connus par la réalisation d'une pluralité de balayages d'ion produit pour une pluralité de fenêtres de sélection de masse de précurseur sélectionnées dans une plage massique de l'échantillon à l'aide d'un spectromètre de masse en tandem,
(b) récupère des valeurs de rapport masse-charge (m/z) connues d'ions produits d'au moins un composé des composés connus à partir d'une mémoire,
(c) génère des chromatogrammes d'ion extraits d'ions produits (XIC) à partir de spectres d'ions produits de la pluralité de spectres d'ions produits d'échantillon qui comprennent des pics de m/z correspondant aux valeurs de m/z connues,
(d) regroupe des pics de XIC des XIC d'ions produits générés par temps de rétention, pour produire une pluralité de groupes de pics de XIC,
(e) sélectionne au moins un groupe de pics de XIC dans la pluralité de groupes de pics de XIC,
(f) crée une liste de pics de m/z pour l'au moins un groupe de pics de XIC par l'obtention de la valeur de m/z pour chaque pic monoisotopique dans chaque spectre utilisé pour générer les pics de XIC de l'au moins un groupe de pics de XIC,
(g) élimine de la liste de pics de m/z des valeurs de m/z qui correspondent aux valeurs de m/z connues,
(h) pour chaque valeur de m/z restante dans la liste de pics de m/z, calcule une différence de m/z entre la valeur de m/z de liste de pics et chaque valeur de m/z des valeurs de m/z des ions produits connus, pour produire une pluralité de valeurs de différence de m/z,
(i) regroupe des valeurs de différence de m/z de la pluralité de valeurs de différence de m/z avec une même valeur de m/z en groupes et compte le nombre de valeurs de différence de m/z dans chaque groupe, pour produire une pluralité de groupes de valeurs de différence de m/z qui comprennent chacun une numération, et
(j) si une numération d'un groupe de valeurs de différence de m/z de la pluralité de groupes de valeurs de différence de m/z dépasse une numération prédéterminée, détecte un ion produit de forme modifiée de l'au moins un composé à la valeur de m/z du groupe de valeurs de différence de m/z.

2. Système de la revendication 1, dans lequel l'au moins un composé comprend un peptide.

3. Système de la revendication 2, dans lequel les valeurs de m/z connues d'ions produits d'au moins un composé comprennent des valeurs de m/z d'ions b et y.

4. Système de la revendication 1, dans lequel l'au moins un composé comprend un médicament administré.

5. Système de la revendication 1, dans lequel l'au moins un composé comprend un stupéfiant.

6. Système de la revendication 1, dans lequel le processeur sélectionne l'au moins un groupe de pics de XIC sur la base d'un temps de rétention de l'au moins un groupe de pics de XIC.

7. Système de la revendication 1, dans lequel le processeur calcule en outre un score pour chaque pic de XIC généré.

8. Système de la revendication 7, dans lequel le processeur sélectionne l'au moins un groupe de pics de XIC sur la base de scores combinés de pics de XIC dans l'au moins un groupe de pics de XIC.

9. Procédé permettant de détecter un ion produit de forme modifiée d'un composé d'intérêt connu dans un échantillon à partir de données de spectrométrie de masse en tandem, comprenant :
(a) la réception d'une pluralité de spectres d'ions produits d'échantillon à l'aide d'un processeur, la pluralité de spectres d'ions produits étant produits par la séparation de composés connus d'un échantillon dans le temps à l'aide d'un dispositif de séparation, et à chaque étape temporelle, l'analyse des composés connus par la réalisation d'une pluralité de balayages d'ion produit pour une pluralité de fenêtres de sélection de masse de précurseur sélectionnées dans une plage massique de l'échantillon à l'aide d'un spectromètre de masse en tandem ;
(b) la récupération de valeurs de rapport masse-charge (m/z) connues d'ions produits d'au moins un composé des composés connus à partir d'une mémoire à l'aide du processeur ;
(c) la génération de chromatogrammes d'ion extraits d'ions produits (XIC) à partir de spectres d'ions produits de la pluralité de spectres d'ions produits d'échantillon qui comprennent des pics de m/z correspondant aux valeurs de m/z connues à l'aide du processeur;
(d) le regroupement de pics de XIC des XIC d'ions produits générés par temps de rétention à l'aide du processeur, pour produire une pluralité de groupes de pics de XIC ;
(e) la sélection d'au moins un groupe de pics de XIC dans la pluralité de groupes de pics de XIC à l'aide du processeur ;
(f) la création d'une liste de pics de m/z pour l'au moins un groupe de pics de XIC par l'obtention de la valeur de m/z pour chaque pic monoisotopique dans chaque spectre utilisé pour générer les pics de XIC de l'au moins un groupe de pics de XIC à l'aide du processeur ;
(g) l'élimination de la liste de pics de m/z des valeurs de m/z qui correspondent aux valeurs de m/z connues à l'aide du processeur ;
(h) pour chaque valeur de m/z restante dans la liste de pics de m/z, le calcul d'une différence de m/z entre la valeur de m/z de liste de pics et chaque valeur de m/z des valeurs de m/z des ions produits connus à l'aide du processeur, pour produire une pluralité de valeurs de différence de m/z ;
(i) le regroupement de valeurs de différence de m/z de la pluralité de valeurs de différence de m/z avec une même valeur de m/z en groupes et le comptage du nombre de valeurs de différence de m/z dans chaque groupe à l'aide du processeur, pour produire une pluralité de groupes de valeurs de différence de m/z qui comprennent chacun une numération ; et
(j) si une numération d'un groupe de valeurs de différence de m/z de la pluralité de groupes de valeurs de différence de m/z dépasse une numération prédéterminée, la détection d'un ion produit de forme modifiée de l'au moins un composé à la valeur de m/z du groupe de valeurs de différence de m/z à l'aide du processeur.

10. Procédé de la revendication 9, dans lequel l'au moins un composé comprend un peptide.

11. Procédé de la revendication 10, dans lequel les valeurs de m/z connues d'ions produits d'au moins un composé comprennent des valeurs de m/z d'ions b et y.

12. Procédé de la revendication 9, dans lequel la sélection à l'étape (e) est basée sur un temps de rétention de l'au moins un groupe de pics de XIC.

13. Procédé de la revendication 9, comprenant en outre le calcul d'un score pour chaque pic de XIC généré à l'étape (c).

14. Procédé de la revendication 13, dans lequel la sélection à l'étape (e) est basée sur les scores combinés de pics de XIC dans l'au moins un groupe de pics de XIC.

15. Produit de programme informatique, comprenant un support de stockage lisible par ordinateur non transitoire et tangible dont le contenu comprend un programme avec des instructions exécutées sur un processeur de manière à réaliser un procédé destiné à détecter un ion produit de forme modifiée d'un composé d'intérêt connu dans un échantillon à partir de données de spectrométrie de masse en tandem, le procédé comprenant :
(a) la fourniture d'un système, le système comprenant au moins un module de logiciel distinct, et les modules de logiciel distincts comprenant un module d'analyse ;
(b) la réception d'une pluralité de spectres d'ions produits d'échantillon à l'aide du module d'analyse, la pluralité de spectres d'ions produits étant produits par la séparation de composés connus d'un échantillon dans le temps à l'aide d'un dispositif de séparation, et à chaque étape temporelle, l'analyse des composés connus par la réalisation d'une pluralité de balayages d'ion produit pour une pluralité de fenêtres de sélection de masse de précurseur sélectionnées dans une plage massique de l'échantillon à l'aide d'un spectromètre de masse en tandem ;
(c) la récupération de valeurs de rapport masse-charge (m/z) connues d'ions produits d'au moins un composé des composés connus à partir d'une mémoire à l'aide du module d'analyse ;
(d) la génération de chromatogrammes d'ion extraits d'ions produits (XIC) à partir de spectres d'ions produits de la pluralité de spectres d'ions produits d'échantillon qui comprennent des pics de m/z correspondant aux valeurs de m/z connues à l'aide du module d'analyse ;
(e) le regroupement de pics de XIC des XIC d'ions produits générés par temps de rétention à l'aide du module d'analyse, pour produire une pluralité de groupes de pics de XIC ;
(f) la sélection d'au moins un groupe de pics de XIC dans la pluralité de groupes de pics de XIC à l'aide du module d'analyse ;
(g) la création d'une liste de pics de m/z pour l'au moins un groupe de pics de XIC par l'obtention de la valeur de m/z pour chaque pic monoisotopique dans chaque spectre utilisé pour générer les pics de XIC de l'au moins un groupe de pics de XIC à l'aide du module d'analyse ;
(h) l'élimination de la liste de pics de m/z des valeurs de m/z qui correspondent aux valeurs de m/z connues à l'aide du module d'analyse ;
(i) pour chaque valeur de m/z restante dans la liste de pics de m/z, le calcul d'une différence de m/z entre la valeur de m/z de liste de pics et chaque valeur de m/z des valeurs de m/z des ions produits connus à l'aide du module d'analyse, pour produire une pluralité de valeurs de différence de m/z ;
(j) le regroupement de valeurs de différence de m/z de la pluralité de valeurs de différence de m/z avec une même valeur de m/z en groupes et le comptage du nombre de valeurs de différence de m/z dans chaque groupe à l'aide du module d'analyse, pour produire une pluralité de groupes de valeurs de différence de m/z qui comprennent chacun une numération ; et
(k) si une numération d'un groupe de valeurs de différence de m/z de la pluralité de groupes de valeurs de différence de m/z dépasse une numération prédéterminée, la détection d'un ion produit de forme modifiée de l'au moins un composé à la valeur de m/z du groupe de valeurs de différence de m/z à l'aide du module d'analyse.
